# EUROPEAN PATENT SPECIFICATION

(11) **EP 4 167 406 B1**
(45) Date of publication and mention of the grant of the patent: **22.07.2026**
(21) Application number: 21202678.5
(22) Date of filing: 14.10.2021
(51) Int. Cl.: H02J 13/333, H02B 1/56, G01M 3/00, H02J 13/00, G01M 3/04, G01M 3/18

(54) **MONITORING SUBSTATIONS OF A POWER GRID**
ÜBERWACHUNG VON UNTERSTATIONEN EINES STROMNETZES
SURVEILLANCE DES SOUS-STATIONS D'UN RÉSEAU ÉLECTRIQUE

(43) Date of publication of application: 19.04.2023
(73) Proprietor: Hitachi Energy Ltd, 8050 Zürich (CH)
(72) Inventor: MERKERT, Lennart, 69115 Heidelberg (DE)
(74) Representative: Vossius & Partner Patentanwälte Rechtsanwälte mbB

(56) References cited:
- CN-A- 109 062 087
- CN-A- 112 134 361
- CN-A- 112 462 827
- CN-U- 209 248 304

## Description

The present disclosure relates to a method and a system for monitoring substations of a power grid, in particular to a method and a system for monitoring heaters and/or for determining water ingress in substations of a power grid.

Heaters are used to reduce humidity and to increase temperature in cold environments. A heater failure can cause damage to electric equipment inside the cabinet potentially leading to failure of e.g. circuit breakers. The same holds true for water ingress into the cabinet.

The prevailing heater monitoring method in high voltage substations relies on current sensors in combination with temperature and/or humidity sensors. A logic is applied to trigger alarm and warnings checking if a current flow through the heater is measured.

However, current sensors are often not designed for low temperature applications (e.g. below -20°C), which are relevant for heater monitoring. Furthermore, integration of multiple sensors can cause additional failures, thus monitoring using current sensors, particularly in combination with temperature and/or humidity sensors are not preferred. Thus, there is a need to improve the monitoring of substations of a power grid, in particular of monitoring heaters in substations and/or determining water ingress in substations.

CN 209 248 304 U relates to a transformer station remote intelligent monitoring system based on a single-chip microcomputer.

CN 112 134 361 A relates to an intelligent monitoring system of a power distribution network. CN 109 062 087 A relates to a substation indoor environment monitoring system.

CN 112 462 827A relates to a control cubicle environment comprehensive monitoring and treatment method and system. The above-mentioned objects are achieved with the features of the independent claims. Dependent claims define preferred embodiments of the disclosure. The invention is specified by the independent claims. In the following description, although numerous features may be designated as optional, it is nevertheless acknowledged that all features comprised in the independent claims are not to be read as optional.

The present disclosure relates to a method for monitoring a plurality of heaters and/or determining water ingress in at least one substation. The method comprises receiving, by a controller from a first sensor a first at least one environmental condition of a first section of the at least one substation; receiving, by the controller from a second sensor a second at least one environmental condition of a second section of the at least one substation; and providing a warning signal, by the controller, according to a difference between the first at least one environmental condition and the second at least one environmental condition.

Various embodiments may advantageously implement the following features:
According to an embodiment, the providing the warning signal comprises providing the warning signal when the difference between the first at least one environmental condition and the second at least one environmental condition is above a set threshold.

According to the invention, the section of the at least one substation is a cabinet or a cubicle. According to an embodiment, the first section is in a first substation and the second section is in a second substation.

According to an embodiment, the first at least one environmental condition comprises a first temperature of the first section, and the second at least one environmental condition comprises a second temperature of the second section.

According to an embodiment, the first at least one environmental condition comprises a first humidity of the first section, and the second at least one environmental condition comprises a second humidity of the second section.

According to an embodiment, the warning signal comprises information regarding a heater failure of and/or water ingress into at least one of the first and the second section of the at least one substation. According to an embodiment, the difference between the first at least one environmental condition and the second at least one environmental condition is indicative of a heater failure and/or water ingress into at least one of the first or the second section of the at least one substation. According to an embodiment, the first at least one environmental condition comprises a first temperature of the first section and a first humidity of the first section and the second at least one environmental condition comprises a second temperature and a second humidity of the second section. According to an embodiment, the providing the warning signal comprises providing a warning signal related to a heater failure when the difference between the first at least one environmental condition and the second at least one environmental condition is above a first set threshold. According to an embodiment, the providing the warning signal comprises providing a warning signal related to water ingress when the difference between the first at least one environmental condition and the second at least one environmental condition is above a second set threshold. According to an embodiment, the second threshold is a greater than the first threshold.

According to an embodiment, the first sensor is located at the bottom of the first section and the second sensor is located at the bottom of the second section. In such a configuration, the difference between the first at least one environmental condition and the second at least one environmental condition is particularly suited for the detection of water ingress, but not limited to.

According to the invention the first sensor is located in the vicinity of a heater in the first section and the second sensor is located in the vicinity of a heater in the second section. In such a configuration, the difference between the first at least one environmental condition and the second at least one environmental condition is particularly suited for the detection of heater failure, but not limited to.

According to an embodiment, water ingress describes, but without limitation, the process of liquid entering a container, in this case the substation and/or the section thereof, through a physical opening. In addition or as an alternative, according to an embodiment, water ingress describes, but without limitation, the process of liquid forming within a container, in this case the substation and/or the section thereof, due to at least one environmental condition either inside or outside of said container or the combination of both inside and outside of said container. Particularly, water ingress describes condensation within said container. More particularly, said condensation is caused by the temperature changes either inside or outside of said container or the temperature changes in both inside and outside of said container.

According to an embodiment, the threshold is set by using a self-learning model.

According to an embodiment, the at least one self-learning model is trained by processing the received environmental conditions or at least one pre-processed data to determine at least two clusters representative of at least one difference of environmental conditions.

According to an embodiment, the method comprises receiving, by a controller from a third sensor a third at least one environmental condition of a third section of the at least one substation; wherein the step of providing the warning signal comprises providing the warning signal according to differences among the first at least one environmental condition, the second at least one environmental condition, and the third at least one environmental condition.

According to an embodiment, the method comprises identifying a location of an error in the heater system according to the differences among the first at least one environmental condition, the second at least one environmental condition, and the third at least one environmental condition.

According to an embodiment, the threshold is set by using at least one self-learning algorithm. According to an embodiment, training of the at least one self-learning algorithm comprises processing the at least one the received environmental conditions or at least one pre-processed data to determine at least two clusters representative of various differences of environmental conditions.

The present disclosure also relates to a controller for monitoring a plurality of heaters and/or determining water ingress in at least one substation comprising a processor configured to receive from a first sensor a first at least one environmental condition of a first section of the at least one substation; receive from a second sensor a second at least one environmental condition of a second section of the at least one substation; and provide a warning signal according to a difference between the first at least one environmental condition and the second at least one environmental condition.

Various embodiments may advantageously implement the following features:
According to an embodiment, the controller is configured to provide the warning signal when the difference between the first at least one environmental condition and the second at least one environmental condition is above a set threshold.

According to an embodiment, the controller sets the threshold by using at least one self-learning model.

According to an embodiment, the controller trains the at least one self-learning model by processing the received environmental conditions or at least one pre-processed data to determine at least two clusters representative of at least one difference of environmental conditions.

The present invention also relates to a system comprising the above mentioned controller and a plurality of heaters in at least one substation comprising a first sensor generating a first at least one environmental condition of a first section of the at least one substation and a second sensor generating a second at least one environmental condition of a second section of the at least one substation.

The exemplary embodiments disclosed herein are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.
Fig.1 shows an exemplary substation of a power grid according to an embodiment of the present disclosure.
Fig.2 shows an exemplary substation of a power grid comprising two substations according to an embodiment of the present disclosure.
Fig. 3 shows an exemplary controller and exemplary signals according to an embodiment of the present disclosure.
Fig. 4 (a) and (b) show exemplary controllers comprising a self-learning engine and a decision engine and exemplary signals according to embodiments of the present disclosure.

In the following, exemplary embodiments of the disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

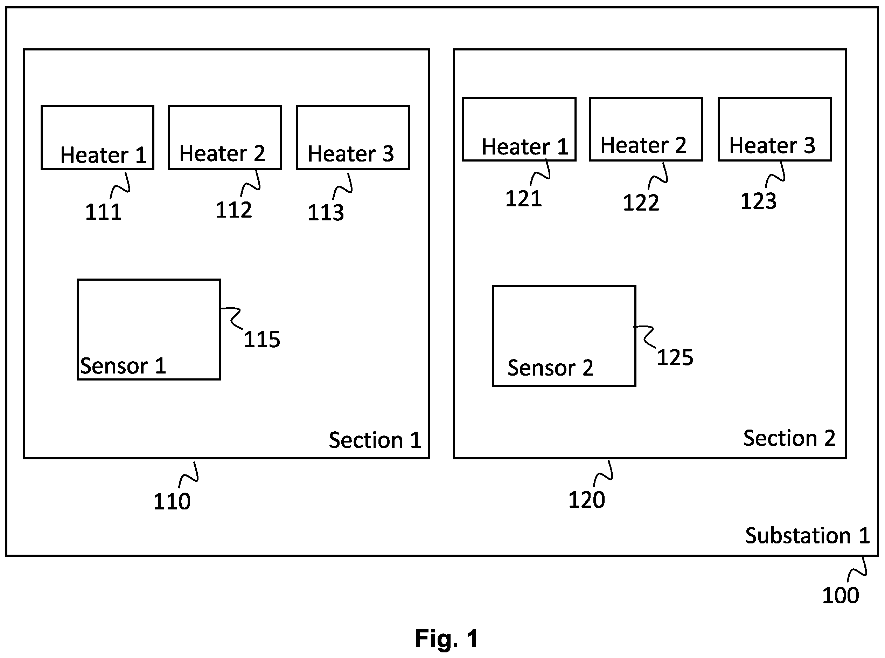

Fig.1 shows an exemplary substation of a power grid according to an embodiment of the present disclosure.

In the embodiment shown in Fig.1, the at least one substation 100 comprising a first section 110 and a second section 120. The first section 110 comprises a first sensor 115 and a first heater 111, a second heater 112 and a third heater 113. The second section 120 of the first substation 100 comprises a second sensor 125 and a fourth heater 121, a fifth heater 122 and a sixth heater 123. The first sensor 115 monitors the heaters 111~113 in the first section 110 and senses at least one environmental condition of the first section 110 of the first substation 100. The second sensor 125 monitors the heaters 121~123 in the second section 120 and senses at least one environmental condition of the second section 120 of the substation 100.

According to an embodiment, the first sensor 115 is located at a fixed position within the first section 110 of the at least one substation 100 with respect to a reference point either within or outside of the first section 110. Furthermore, the second sensor 125 may be located at fixed position within the second section 120 of the at least one substation 100 with respect to a reference point either within or outside of the second section 120.

According to an embodiment, the warning signal comprises information regarding a heater failure of and/or water ingress into at least one of the first 110 and the second section 120 of the at least one substation 100. In other words, the difference between the first at least one environmental condition and the second at least one environmental condition may be indicative of a heater failure and/or water ingress into at least one of the first 110 or the second section 120 of the at least one substation 100, particularly when the environmental condition is humidity and temperature. According to an embodiment, the providing the warning signal comprises providing a warning signal related to a heater failure when the difference between the first at least one environmental condition and the second at least one environmental condition is above a first set threshold. According to an embodiment, the providing the warning signal comprises providing a warning signal related to water ingress when the difference between the first at least one environmental condition and the second at least one environmental condition is above a second set threshold. According to an embodiment, the second threshold is a greater than the first threshold.

According to an embodiment, the first sensor 115 is located at the bottom of the first section 110 and the second sensor 125 is located at the bottom of the second section 120. In such a configuration, the difference between the first at least one environmental condition and the second at least one environmental condition is particularly suited for the detection of water ingress, but not limited to, e.g. a heater failure may be detected as well.

According to the invention, the first sensor 115 is located in the vicinity of a heater/heaters in the first section and the second sensor is located in the vicinity of a heater/heaters in the second section. In such a configuration, the difference between the first at least one environmental condition and the second at least one environmental condition is particularly suited for the detection of heater failure, but not limited to, e.g. water ingress may be detected as well.

According to an embodiment, water ingress describes, but without limitation, the process of liquid entering a container, in this case the substation and/or the section thereof, through a physical opening. In addition or as an alternative, according to an embodiment, water ingress describes, but without limitation, the process of liquid forming within a container, in this case the substation and/or the section thereof, due to at least one environmental condition either inside or outside of said container or the combination of both inside and outside of said container. Particularly, water ingress describes condensation within said container. More particularly, said condensation is caused by the temperature changes either inside or outside of said container or the temperature changes in both inside and outside of said container.

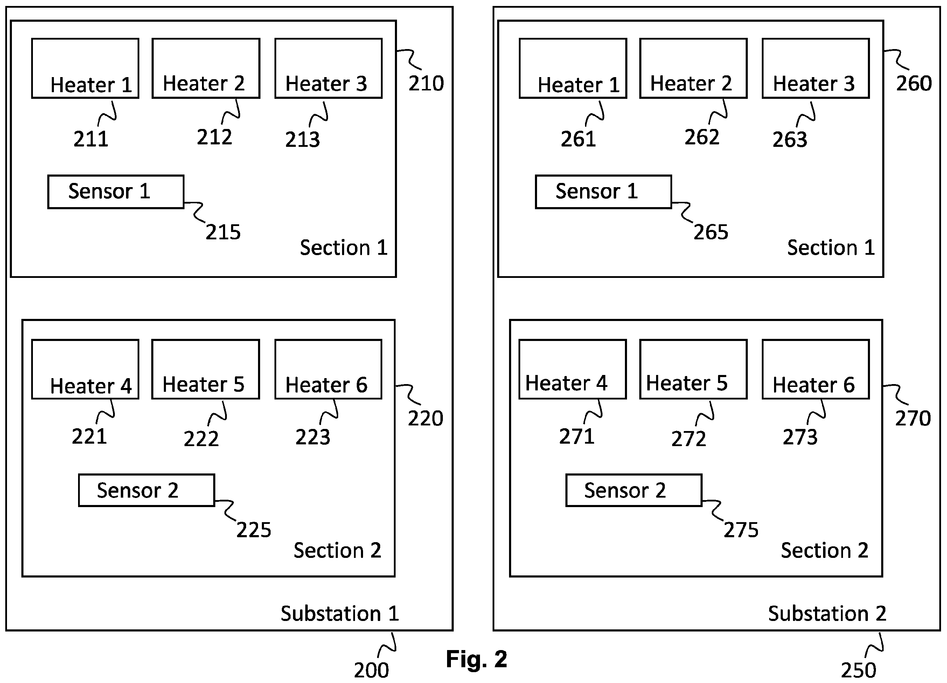

In the embodiment shown in Fig.2, there are two substations 200 and 250. However, it is understood by the skilled person that number of substations is not limited to two, e.g. there can be any integer number of substations, e.g. 3, 4, 5, 6, ..., 10, ...,20 etc. The first substation 200 comprises a first section 210 and a second section 220. The first section 210 of the first substation 200 comprises a first sensor 215, a first heater 211, a second heater 212, and a third heater 213. The second section 220 of the first substation 200 comprises a second sensor 225 and a fourth heater 221, a fifth heater 222 and a sixth heater 223. The second substation 250 comprises a first section 260 and a second section 270. The first section 260 of the second substation 250 comprises a first sensor 265, a first heater 261, a second heater 262, and a third heater 263. The second section 270 of the second substation 250 comprises a second sensor 275 and a fourth heater 271, a fifth heater 272 and a sixth heater 273.

The first sensor 215 in the first section 210 of the first substation 200 monitors the heaters 211^{~}213 in the first section 210 of the first substation 200 and senses at least one environmental condition of the first section 210 of the first substation 200. The second sensor 225 in the second section 220 of the first substation 200 monitors the heaters 221~223 in the second section 220 of the first substation 200 and senses at least one environmental condition of the second section 220 of the first substation 200. The first sensor 265 in the first section 260 of the second substation 250 monitors the heaters 261~263 in the first section 260 of the second substation 250 and senses at least one environmental condition of the first section 260 of the second substation 250. The second sensor 275 in the second section 270 of the second substation 250 monitors the heaters 271~273 in the second section 270 of the second substation 250 and senses at least one environmental condition of the second section 270 of the second substation 250.

It is understood by the skilled person that at least one substation comprises at least one section. The at least one section comprises a plurality of heaters and at least one sensor. Thus, it is understood by the skilled person that the number of above-mentioned components is not limited by the embodiments shown in figures.

According to the invention, a section of the at least one substation is a cabinet or a cubicle.

According to an embodiment, a first section is in a first substation and a second section is in a second substation. That is, a first section is the first section 210 of the first substation 200 and a second section is the second section 270 of the second substation 250, or any other combination of sections of substations.

According to an embodiment, the first at least one environmental condition comprises a first temperature of the first section, and the second at least one environmental condition comprises a second temperature of the second section.

According to an embodiment, the first at least one environmental condition comprises a first humidity of the first section, and the second at least one environmental condition comprises a second humidity of the second section.

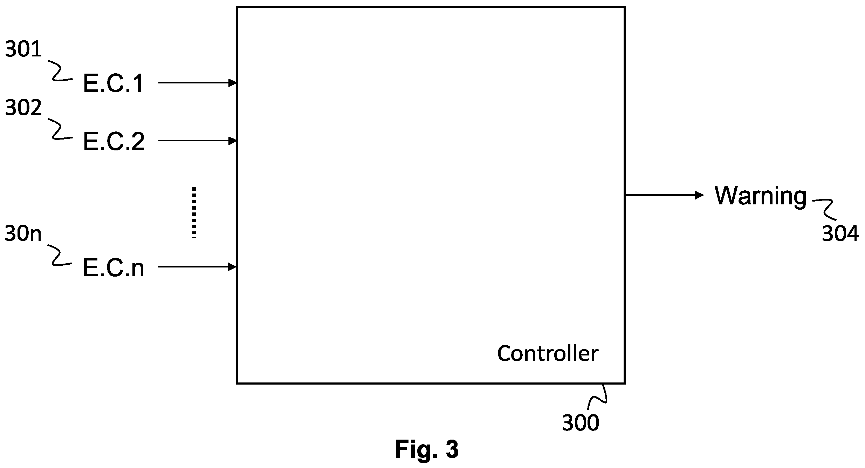

Fig.3 shows an exemplary controller and exemplary signals according to an embodiment of the present disclosure.

In the embodiment shown in Fig.3, the controller 300 receives a first environmental condition 301 of the first section 110 of the first substation 100. The controller 320 further receives a second environmental condition 302 of the second section 120 of the first substation 100. The controller provides a warning signal 304 according to a difference between the first environmental condition 301 and the second environmental condition 302. Alternatively or in addition, a controller 300 receives a first environmental condition 301 of the first section 210 of the first substation 200. The controller 320 further receives a second environmental condition 302 of the first section 260 of the second substation 250. The controller provides a warning signal 304 according to a difference between the first environmental condition 301 and the second environmental condition 302. Alternatively or in addition, a controller receives n environmental condition(s) from any one of sections of any one of substations. Alternatively or in addition, a controller 300 receives environmental conditions from any other combination of sections of substations. Although omitted for simplicity, it is understood by the skilled person that the controller receives further environmental conditions of the first section 110, the second section 120 and/or other sections of the first substation 100 and/or other substations. It is further understood by the skilled person that the controller provides warning signals 304 according to the differences among the first environmental condition 301, the second environmental condition 302, and, if any, further received environmental conditions.

According to an embodiment, the controller is located in each of the first substation and the second substation. Additionally or alternatively, the controller 300 is a central unit located in or outside of the at least one substation. According to an embodiment, the controller 300 is further configured to communicate unidirectionally or bidirectionally with another at least one entity which is configured to communicate.

According to an embodiment, the controller 300 is further configured to calculate and/or memorize the relation or correlation between the first at least one environmental condition and the second at least one environmental condition within a section of the at least one substation.

According to an embodiment, the controller 300 is further configured to generate the warning signals by monitoring whether the first at least one environmental condition and the second at least one environmental condition follows the calculated and/or memorized relation or correlation between the first at least one environmental condition and the second at least one environmental condition.

According to an embodiment, the providing the warning signal comprises providing the warning signal when the difference between the first at least one environmental condition and the second at least one environmental condition is above a set threshold.

According to an embodiment, a location of an error in the heater system is identified according to the differences among the first at least one environmental condition, the second at least one environmental condition, and the third at least one environmental condition.

According to an embodiment, the threshold is set by using at least one self-learning algorithm.

According to an embodiment, training of the at least one self-learning algorithm comprises processing the at least one the received environmental condition or at least one pre-processed data to determine at least two clusters representative of various differences of environmental conditions.

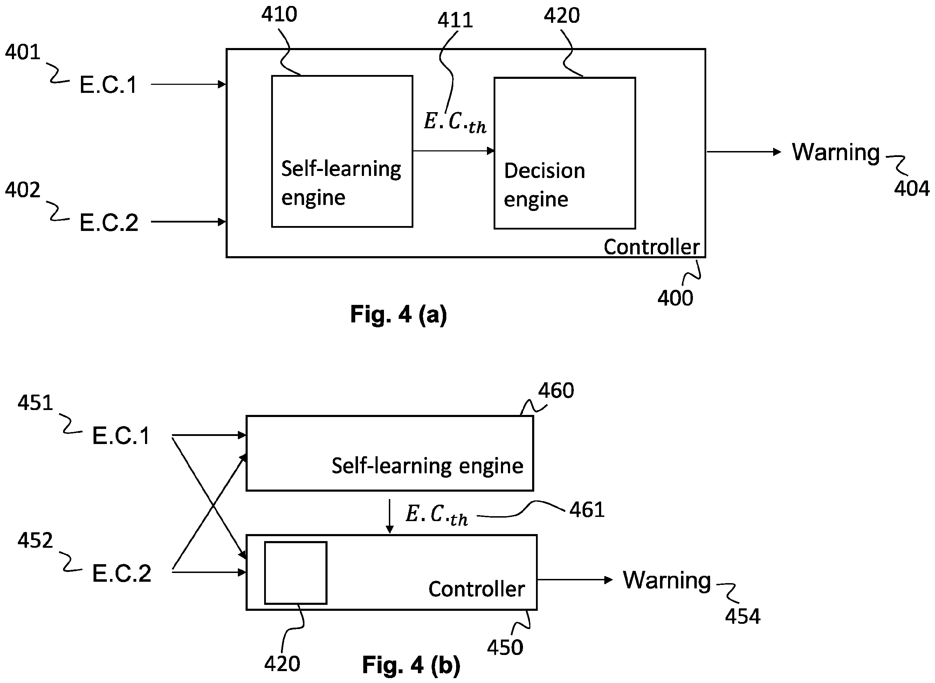

In the embodiment shown in Fig.4 (a), the controller 400 comprises a self-learning engine 410. The self-learning engine 410 comprises a plurality of machine-readable instructions and/or at least one self-learning algorithm. The self-learning algorithm is trained using the first environmental condition 401 and/or the second environmental condition 402. It is understood by the skilled person that, if any, further received environmental conditions can be used to train the algorithm thereof. The self-learning engine 410 sets a threshold to the difference between the first at least one environmental condition 401 and the second environmental condition 402 and feeds the set threshold to a decision engine 420. The decision engine either alone or in conjunction with other functional blocks of the controller 400 determines to generate a warning signal 404.

In the embodiment shown in Fig.4 (b), the controller 450 comprises a decision engine 420. A self-learning engine 460 is a separate unit from the controller 450 and comprises a plurality of machine-readable instructions and/or at least one self-learning algorithm. The self-learning algorithm is trained using the first environmental condition 451 and/or the second environmental condition 452. It is understood by the skilled person that, if any, further received environmental conditions can be used to train the algorithm thereof. The self-learning engine 460 sets a threshold to the difference between the first at least one environmental condition 451 and the second environmental condition 452 and feeds the set threshold to the controller 450. The controller 450 determines to generate a warning signal 454.

It is understood by the skilled person that the number of environmental conditions to train the self-learning engine 410 is not limited to the number of environmental conditions illustrated in Fig.4.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for monitoring a plurality of heaters and/or determining water ingress in at least one substation, the method comprising:
receiving, by a controller (300, 400, 450), from a first sensor (115, 215, 265), a first at
least one environmental condition of a first section (110, 210, 260) of the at least one substation,
wherein the first sensor (115, 215, 265) is a temperature sensor and/or a humidity sensor, and
wherein the first at least one environmental condition is a temperature and/or a humidity;
receiving, by the controller (300, 400, 450), from a second sensor (125, 225, 275), a
second at least one environmental condition of a second section (120, 220, 270) of the at least one substation,
wherein the second sensor (125, 225, 275) is a temperature sensor and/or a humidity sensor,
wherein the second at least one environmental condition is a temperature and/or a humidity,
wherein a type of the first sensor (115, 215, 265) is same as a type of the second sensor (125, 225, 275),
wherein a type of the first at least one environmental condition is same as a type of the second at least one environmental condition,
wherein the first sensor (115, 215, 265) is located on or in the vicinity of at least one of the plurality of heaters located inside the first section (110, 210, 260),
wherein the second sensor (125, 225, 275) is located on or in the vicinity of at least one of the plurality of heaters located inside the second section (120, 220, 270), and
wherein the first section (110, 210, 260) and/or second section (120, 220, 270) of the at least one substation is a cabinet or a cubicle; and
providing a warning signal (304, 404, 454), by the controller (300, 400, 450), according to a difference between the first at least one environmental condition and the second at least one environmental condition.

2. The method of claim 1, wherein the providing the warning signal (304, 404, 454) comprises:
providing the warning signal (304, 404, 454) when the difference between the first at least one environmental condition and the second at least one environmental condition is above a set threshold.

3. The method of claim 1 or 2, wherein the difference between the first at least one environmental condition and the second at least one environmental condition is indicative of a heater failure and/or water ingress into at least one of the first or the second section (120, 220, 270) of the at least one substation.

4. The method of any one of claims 1 to 3, wherein the first section (110, 210, 260) is in a first substation and the second section (120, 220, 270) is in a second substation.

5. The method of any one of claims 2 to 4, wherein the threshold is set by using at least one self-learning model.

6. The method of claim 5, wherein the at least one self-learning model is trained by processing the received first and/or second at least one environmental condition to determine at least two clusters representative of various difference of environmental conditions.

7. The method of any of claims 1 to 6, further comprising:
receiving, by the controller (300, 400, 450), from a third sensor, a third environmental condition of a third section of the at least one substation,
wherein the third sensor is located on or in the vicinity of at least one of the plurality of heaters located inside the third section; and
wherein the step of providing the warning signal (304, 404, 454) comprises providing the warning signal (304, 404, 454) according to differences among the first at least one environmental condition, the second at least one environmental condition, and the third environmental condition.

8. The method of claim 7, further comprising:
identifying a location of an error in the heater system according to the differences among the first at least one environmental condition, the second at least one environmental condition, and the third environmental condition.

9. A system which includes a controller (300, 400, 450) for monitoring a plurality of heaters and/or determining water ingress in at least one substation, the at least one substation, the plurality of heaters in the at least one substation, a first sensor (115, 215, 265), and a second sensor (125, 225, 275), the at least one substation having a first section (110, 210, 260) and a second section (120, 220, 270), the controller (300, 400, 450) comprising a processor configured to:
receive from the first sensor (115, 215, 265) a first at least one environmental condition of the first section (110, 210, 260) of the at least one substation,
wherein the first sensor (115, 215, 265) is a temperature sensor and/or a humidity sensor, and
wherein the first at least one environmental condition is a temperature and/or a humidity;
receive from the second sensor (125, 225, 275) a second at least one environmental condition of the second section (120, 220, 270) of the at least one substation;
wherein the second sensor (125, 225, 275) is a temperature sensor and/or a humidity sensor,
wherein the second at least one environmental condition is a temperature and/or a humidity,
wherein a type of the first sensor (115, 215, 265) is same as a type of the second sensor (125, 225, 275),
wherein a type of the first at least one environmental condition is same as a type of the second at least one environmental condition,
wherein the first sensor (115, 215, 265) is located on or in the vicinity of at least one of the plurality of heaters located inside the first section (110, 210, 260),
wherein the second sensor (125, 225, 275) is located on or in the vicinity of at least one of the plurality of heaters located inside the second section (120, 220, 270), and
wherein the first section (110, 210, 260) and/or second section (120, 220, 270) of the at least one substation is a cabinet or a cubicle; and
provide a warning signal (304, 404, 454) according to a difference between the first at least one environmental condition and the second at least one environmental condition.

10. The system according to claim 9, wherein the difference between the first at least one environmental condition and the second at least one environmental condition is indicative of a heater failure and/or water ingress into at least one of the first or the second section (120, 220, 270) of the at least one substation.

11. The system according to claim 9 or 10, wherein the controller (300, 400, 450) is configured to provide the warning signal (304, 404, 454) when the difference between the first at least one environmental condition and the second at least one environmental condition is above a set threshold.

12. The system of claim 11, wherein the controller (300, 400, 450) is configured to set the threshold by using at least one self-learning model.

13. The system of claim 12, wherein the controller (300, 400, 450) is configured to train the at least one self-learning model by processing the received first and/or second at least one environmental condition to determine at least two clusters representative of various difference of environmental conditions.

## Patentansprüche

1. Ein Verfahren zum Überwachen einer Mehrzahl von Heizgeräten und/oder Bestimmen von Wassereintritt in mindestens eine Unterstation, wobei das Verfahren umfasst:
Empfangen, durch eine Steuerung (300, 400, 450), von einem ersten Sensor (115, 215, 265), einer ersten mindestens einen Umgebungsbedingung eines ersten Abschnitts (110, 210, 260) der mindestens einen Unterstation,
wobei der erste Sensor (115, 215, 265) ein Temperatursensor und/oder ein Feuchtigkeitssensor ist und
wobei die erste mindestens eine Umgebungsbedingung eine Temperatur und/oder eine Feuchtigkeit ist;
Empfangen, durch die Steuerung (300, 400, 450), von einem zweiten Sensor (125, 225, 275), einer zweiten mindestens einen Umgebungsbedingung eines zweiten Abschnitts (120, 220, 270) der mindestens einen Unterstation,
wobei der zweite Sensor (125, 225, 275) ein Temperatursensor und/oder ein Feuchtigkeitssensor ist, wobei die zweite mindestens eine Umgebungsbedingung eine Temperatur und/oder eine Feuchtigkeit ist,
wobei ein Typ des ersten Sensors (115, 215, 265) gleich einem Typ des zweiten Sensors (125, 225, 275) ist,
wobei ein Typ der ersten mindestens einen Umgebungsbedingung gleich einem Typ der zweiten mindestens einen Umgebungsbedingung ist,
wobei der erste Sensor (115, 215, 265) auf oder in der Nähe von mindestens einem der Mehrzahl von Heizelementen angeordnet ist, die innerhalb des ersten Abschnitts (110, 210, 260) angeordnet sind,
wobei der zweite Sensor (125, 225, 275) auf oder in der Nähe von mindestens einem der Mehrzahl von Heizelementen angeordnet ist, die innerhalb des zweiten Abschnitts (120, 220, 270) angeordnet sind, und
wobei der erste Abschnitt (110, 210, 260) und/oder der zweite Abschnitt (120, 220, 270) der mindestens einen Unterstation ein Schrank oder eine Kabine ist; und Bereitstellen eines Warnsignals (304, 404, 454) durch die Steuerung (300, 400, 450) gemäß einer Differenz zwischen der ersten mindestens einen Umgebungsbedingung und der zweiten mindestens einen Umgebungsbedingung.

2. Das Verfahren nach Anspruch 1, wobei das Bereitstellen des Warnsignals (304, 404, 454) umfasst: Bereitstellen des Warnsignals (304, 404, 454), wenn die Differenz zwischen der ersten mindestens einen Umgebungsbedingung und der zweiten mindestens einen Umgebungsbedingung über einem eingestellten Schwellenwert liegt.

3. Das Verfahren nach Anspruch 1 oder 2, wobei die Differenz zwischen der ersten mindestens einen Umgebungsbedingung und der zweiten mindestens einen Umgebungsbedingung einen Heizungsausfall und/oder Wassereintritt in den ersten und/oder den zweiten Abschnitt (120, 220, 270) der mindestens einen Unterstation indiziert.

4. Das Verfahren nach einem der Ansprüche 1 bis 3, wobei der erste Abschnitt (110, 210, 260) in einer ersten Unterstation ist und der zweite Abschnitt (120, 220, 270) in einer zweiten Unterstation ist.

5. Das Verfahren nach einem der Ansprüche 2 bis 4, wobei der Schwellenwert unter Verwendung mindestens eines Selbstlernmodells eingestellt wird.

6. Das Verfahren nach Anspruch 5, wobei das mindestens eine Selbstlernmodell durch Verarbeiten der empfangenen ersten und/oder zweiten mindestens einen Umgebungsbedingung trainiert wird, um mindestens zwei Cluster zu bestimmen, die verschiedene Differenzen von Umgebungsbedingungen repräsentieren.

7. Das Verfahren nach einem der Ansprüche 1 bis 6, ferner umfassend:
Empfangen, durch die Steuerung (300, 400, 450), von einem dritten Sensor, einer dritten Umgebungsbedingung eines dritten Abschnitts der mindestens einen Unterstation, wobei der dritte Sensor auf oder in der Nähe von mindestens einem der Mehrzahl von Heizgeräten angeordnet ist, die innerhalb des dritten Abschnitts angeordnet sind; und
wobei der Schritt des Bereitstellens des Warnsignals (304, 404, 454) das Bereitstellen des Warnsignals (304, 404, 454) gemäß Differenzen zwischen der ersten mindestens einen Umgebungsbedingung, der zweiten mindestens einen Umgebungsbedingung und der dritten Umgebungsbedingung umfasst.

8. Das Verfahren nach Anspruch 7, ferner umfassend: Identifizieren einer Position eines Fehlers im Heizsystem gemäß den Differenzen zwischen der ersten mindestens einen Umgebungsbedingung, der zweiten mindestens einen Umgebungsbedingung und der dritten Umgebungsbedingung.

9. Ein System, das eine Steuerung (300, 400, 450) zum Überwachen einer Mehrzahl von Heizgeräten und/oder Bestimmen von Wassereintritt in mindestens eine Unterstation, die mindestens eine Unterstation, die Mehrzahl von Heizgeräten in der mindestens einen Unterstation, einen ersten Sensor (115, 215, 265) und einen zweiten Sensor (125, 225, 275) aufweist, wobei die mindestens eine Unterstation einen ersten Abschnitt (110, 210, 260) und einen zweiten Abschnitt (120, 220, 270) aufweist, wobei die Steuerung (300, 400, 450) einen Prozessor umfasst, der ausgelegt ist zum:
Empfangen, vom ersten Sensor (115, 215, 265), einer ersten mindestens einen Umgebungsbedingung des ersten Abschnitts (110, 210, 260) der mindestens einen Unterstation,
wobei der erste Sensor (115, 215, 265) ein Temperatursensor und/oder ein Feuchtigkeitssensor ist und
wobei die erste mindestens eine Umgebungsbedingung eine Temperatur und/oder eine Feuchtigkeit ist;
Empfangen, vom zweiten Sensor (125, 225, 275), einer zweiten mindestens einen Umgebungsbedingung des zweiten Abschnitts (120, 220, 270) der mindestens einen Unterstation;
wobei der zweite Sensor (125, 225, 275) ein Temperatursensor und/oder ein Feuchtigkeitssensor ist, wobei die zweite mindestens eine Umgebungsbedingung eine Temperatur und/oder eine Feuchtigkeit ist,
wobei ein Typ des ersten Sensors (115, 215, 265) gleich einem Typ des zweiten Sensors (125, 225, 275) ist,
wobei ein Typ der ersten mindestens einen Umgebungsbedingung gleich einem Typ der zweiten mindestens einen Umgebungsbedingung ist,
wobei der erste Sensor (115, 215, 265) auf oder in der Nähe von mindestens einem der Mehrzahl von Heizgeräten angeordnet ist, die innerhalb des ersten Abschnitts (110, 210, 260) angeordnet sind,
wobei der zweite Sensor (125, 225, 275) auf oder in der Nähe von mindestens einem der Mehrzahl von Heizelementen angeordnet ist, die innerhalb des zweiten Abschnitts (120, 220, 270) angeordnet sind, und
wobei der erste Abschnitt (110, 210, 260) und/oder der zweite Abschnitt (120, 220, 270) der mindestens einen Unterstation ein Schrank oder eine Kabine ist; und Bereitstellen eines Warnsignals (304, 404, 454) gemäß einer Differenz zwischen der ersten mindestens einen Umgebungsbedingung und der zweiten mindestens einen Umgebungsbedingung.

10. Das System nach Anspruch 9, wobei die Differenz zwischen der ersten mindestens einen Umgebungsbedingung und der zweiten mindestens einen Umgebungsbedingung einen Heizungsausfall und/oder Wassereintritt in den ersten und/oder den zweiten Abschnitt (120, 220, 270) der mindestens einen Unterstation indiziert.

11. Das System nach Anspruch 9 oder 10, wobei die Steuerung (300, 400, 450) dazu ausgelegt ist, das Warnsignal (304, 404, 454) bereitzustellen, wenn die Differenz zwischen der ersten mindestens einen Umgebungsbedingung und der zweiten mindestens einen Umgebungsbedingung über einem eingestellten Schwellenwert liegt.

12. Das System nach Anspruch 11, wobei die Steuerung (300, 400, 450) dazu ausgelegt ist, den Schwellenwert unter Verwendung mindestens eines Selbstlernmodells einzustellen.

13. Das System nach Anspruch 12, wobei die Steuerung (300, 400, 450) dazu ausgelegt ist, das mindestens eine Selbstlernmodell durch Verarbeiten der empfangenen ersten und/oder zweiten mindestens einen Umgebungsbedingung zu trainieren, um mindestens zwei Cluster zu bestimmen, die verschiedene Differenzen von Umgebungsbedingungen repräsentieren.

## Revendications

1. Procédé de surveillance d'une pluralité de dispositifs de chauffage et/ou de détermination de l'entrée d'eau dans au moins une sous-station, le procédé comprenant les étapes suivantes :
recevoir, par un contrôleur (300, 400, 450), en provenance d'un premier capteur (115, 215, 265) une première au moins une condition environnementale d'une première section (110, 210, 260) de l'au moins une sous-station,
où le premier capteur (115, 215, 265) est un capteur de température et/ou un capteur d'humidité, et
la première au moins une condition environnementale étant une température et/ou une humidité ;
recevoir, par le contrôleur (300, 400, 450), en provenance d'un deuxième capteur (125, 225, 275), une deuxième au moins une condition environnementale d'une deuxième section (120, 220, 270) de l'au moins une sous-station,
où le deuxième capteur (125, 225, 275) est un capteur de température et/ou un capteur d'humidité,
la deuxième au moins une condition environnementale étant une température et/ou une humidité,
où un type du premier capteur (115, 215, 265) est le même qu'un type du deuxième capteur (125, 225, 275),
où un type de la première au moins une condition environnementale est le même qu'un type de la deuxième au moins une condition environnementale,
où le premier capteur (115, 215, 265) est situé sur ou à proximité d'au moins un de la pluralité de dispositifs de chauffage situés à l'intérieur de la première section (110, 210, 260),
où le deuxième capteur (125, 225, 275) est situé sur ou à proximité d'au moins un de la pluralité de dispositifs de chauffage situés à l'intérieur de la deuxième section (120, 220, 270), et
où la première section (110, 210, 260) et/ou la deuxième section (120, 220, 270) de l'au moins une sous-station sont une armoire ou une cabine ; et
fournir un signal d'avertissement (304, 404, 454), par le contrôleur (300, 400, 450), en fonction d'une différence entre la première au moins une condition environnementale et la deuxième au moins une condition environnementale.

2. Procédé selon la revendication 1, dans lequel la fourniture du signal d'avertissement (304, 404, 454) comprend l'étape suivante :
fournir le signal d'avertissement (304, 404, 454) lorsque la différence entre la première au moins une condition environnementale et la deuxième au moins une condition environnementale est supérieure à un seuil défini.

3. Procédé selon la revendication 1 ou la revendication 2, dans lequel la différence entre la première au moins une condition environnementale et la deuxième au moins une condition environnementale est indicative d'une défaillance du dispositif de chauffage et/ou d'une entrée d'eau dans au moins l'une de la première ou de la deuxième section (120, 220, 270) de l'au moins une sous-station.

4. Procédé selon l'une quelconque des revendications 1 à 3, dans lequel la première section (110, 210, 260) se trouve dans une première sous-station et la deuxième section (120, 220, 270) se trouve dans une deuxième sous-station.

5. Procédé selon l'une quelconque des revendications 2 à 4, dans lequel le seuil est fixé en utilisant au moins un modèle d'auto-apprentissage.

6. Procédé selon la revendication 5, dans lequel l'au moins un modèle d'auto-apprentissage est entraîné en traitant la première et/ou la deuxième au moins une condition environnementale reçue pour déterminer au moins deux grappes représentatives de diverses différences de conditions environnementales.

7. Procédé selon l'une quelconque des revendications 1 à 6, comprenant en outre les étapes suivantes :
recevoir, par le contrôleur (300, 400, 450), en provenance d'un troisième capteur, une troisième condition environnementale d'une troisième section de l'au moins une sous-station,
où le troisième capteur est situé sur ou à proximité d'au moins un de la pluralité de dispositifs de chauffage situés à l'intérieur de la troisième section ; et
où l'étape de fourniture du signal d'avertissement (304, 404, 454) comprend la fourniture du signal d'avertissement (304, 404, 454) en fonction de différences parmi la première au moins une condition environnementale, la deuxième au moins une condition environnementale, et la troisième condition environnementale.

8. Procédé selon la revendication 7, comprenant en outre l'étape suivante :
identifier l'emplacement d'une erreur dans le système de chauffage en fonction des différences entre la première au moins une condition environnementale, la deuxième au moins une condition environnementale et la troisième condition environnementale.

9. Système comprenant un contrôleur (300, 400, 450) pour surveiller une pluralité de dispositifs de chauffage et/ou déterminer une entrée d'eau dans au moins une sous-station, l'au moins une sous-station, la pluralité de dispositifs de chauffage dans l'au moins une sous-station, un premier capteur (115, 215, 265) et un deuxième capteur (125, 225, 275), l'au moins une sous-station présentant une première section (110, 210, 260) et une deuxième section (120, 220, 270), le contrôleur (300, 400, 450) comprenant un processeur configuré pour :
recevoir en provenance du premier capteur (115, 215, 265) une première au moins une condition environnementale de la première section (110, 210, 260) de l'au moins une sous-station,
où le premier capteur (115, 215, 265) est un capteur de température et/ou un capteur d'humidité, et
la première au moins une condition environnementale étant une température et/ou une humidité ;
recevoir en provenance du deuxième capteur (125, 225, 275) une deuxième au moins une condition environnementale de la deuxième section (120, 220, 270) de l'au moins une sous-station ;
où le deuxième capteur (125, 225, 275) est un capteur de température et/ou un capteur d'humidité,
la deuxième au moins une condition environnementale étant une température et/ou une humidité,
où un type du premier capteur (115, 215, 265) est le même qu'un type du deuxième capteur (125, 225, 275),
où un type de la première au moins une condition environnementale est le même qu'un type de la deuxième au moins une condition environnementale,
où le premier capteur (115, 215, 265) est situé sur ou à proximité d'au moins un de la pluralité de dispositifs de chauffage situés à l'intérieur de la première section (110, 210, 260),
où le deuxième capteur (125, 225, 275) est situé sur ou à proximité d'au moins un de la pluralité de dispositifs de chauffage situés à l'intérieur de la deuxième section (120, 220, 270), et
où la première section (110, 210, 260) et/ou la deuxième section (120, 220, 270) de l'au moins une sous-station sont une armoire ou une cabine ; et
fournir un signal d'avertissement (304, 404, 454) en fonction d'une différence entre la première au moins une condition environnementale et la deuxième au moins une condition environnementale.

10. Système selon la revendication 9, dans lequel la différence entre la première au moins une condition environnementale et la deuxième au moins une condition environnementale est indicative d'une défaillance du dispositif de chauffage et/ou d'une entrée d'eau dans au moins l'une de la première ou de la deuxième section (120, 220, 270) de l'au moins une sous-station.

11. Système selon la revendication 9 ou la revendication 10, dans lequel le contrôleur (300, 400, 450) est configuré pour fournir le signal d'avertissement (304, 404, 454) lorsque la différence entre la première au moins une condition environnementale et la deuxième au moins une condition environnementale est supérieure à un seuil défini.

12. Système selon la revendication 11, dans lequel le contrôleur (300, 400, 450) est configuré pour fixer le seuil en utilisant au moins un modèle d'auto-apprentissage.

13. Système selon la revendication 12, dans lequel le contrôleur (300, 400, 450) est configuré pour entraîner l'au moins un modèle d'auto-apprentissage en traitant la première et/ou la deuxième au moins une condition environnementale reçue pour déterminer au moins deux grappes représentatives de diverses différences de conditions environnementales.
